# EUROPÄISCHE PATENTSCHRIFT

(11) **EP 3 188 887 B1**
(45) Veröffentlichungstag und Bekanntmachung des Hinweises auf die Patenterteilung: **11.03.2020**
(21) Anmeldenummer: 15757487.2
(22) Anmeldetag: 02.09.2015
(51) Int. Cl.: B29C 48/70, B29C 48/27, B29C 48/10, B29C 48/32, B29C 48/36

(54) **WENDEVORRICHTUNG FÜR DAS WENDEN EINER SCHMELZE UND SPÜLVERFAHREN**
OVERTURNING DEVICE FOR OVERTURNING MOLTEN MATERIAL AND PURGING METHOD
DISPOSITIF DE RETOURNEMENT POUR LE RETOURNEMENT D'UNE MATIÈRE FONDUE ET PROCÉDÉ DE RINÇAGE

(30) Priorität: 03.09.2014 DE 102014112715
(43) Veröffentlichungstag der Anmeldung: 12.07.2017
(73) Patentinhaber: Windmöller & Hölscher KG, 49525 Lengerich (DE)
(72) Erfinder: BACKMANN, Martin, 49525 Lengerich (DE); JÄCKERING, Hermann-Josef, 48488 Emsbüren (DE); BUSSMANN, Markus, 45147 Essen (DE); LIESBROCK, Bernd, 49525 Lengerich (DE); GOLUBSKI, Karsten, 45721 Haltern am See (DE)
(86) Internationale Anmeldenummer: PCT/EP2015/069995
(87) Internationale Veröffentlichungsnummer: WO 2016/034603

(56) Entgegenhaltungen:
- EP-A1- 0 887 172
- EP-A2- 0 816 047
- WO-A2-2004/004875
- DE-A1- 3 245 084
- DE-A1- 3 517 793
- DE-A1- 10 027 653
- US-A- 3 911 073
- US-A1- 2011 001 267

## Beschreibung

Die vorliegende Erfindung betrifft eine Wendevorrichtung für das Wenden einer Schmelze in einem Schmelzekanal, einen Blaskopf zum Durchführen eines Blasfolienextrusionsverfahrens sowie ein Verfahren zur Durchführung eines Spülvorgangs in einem Blaskopf.

Es ist bekannt, dass Extrusionsvorrichtungen verwendet werden, um eine Kunststoffschmelze zu erzeugen. Diese Kunststoffschmelze kann in unterschiedlichster Weise weiterverwendet werden. So ist es beispielsweise denkbar, die Schmelze in eine Kavität einer Spritzgussvorrichtung einzubringen, um dort entsprechende Bauteile durch Spritzguss zu erzeugen. Auch ist es bekannt, dass die Schmelze für ein sogenanntes Blasextrusionsverfahren zur Verfügung gestellt wird, bei welcher eine Blasfolie extrudiert wird. In sämtlichen Fällen ist es erforderlich, dass am Ende des Extruders die verflüssigte Schmelze über entsprechende Schmelzekanäle an den jeweiligen Ort der Verwendung transportiert wird. Diese Kanäle können beliebig komplex sein und insbesondere sich auch auf einzelne Kanäle aufteilen.

Nachteilhaft bei den bekannten Lösungen der Extrusionsvorrichtungen ist es, dass diese einen hohen Aufwand für den Materialwechsel mit sich bringen. So muss ein sogenannter Spülvorgang durchgeführt werden, wenn ein Materialwechsel von einem ersten Schmelzematerial auf ein zweites Schmelzematerial erfolgen soll. Wird beispielsweise bei einer Blasfolienextrusionsvorrichtung eine gewisse Zeit ein Produkt mit einer blauen Folienfarbe hergestellt und anschließend wird ein Wechsel auf eine transparente Folienfarbe gewünscht, so muss erst die blaue Folienfarbe und das entsprechende Schmelzematerial aus den einzelnen Schmelzekanälen gespült werden. Hierfür wird bereits mit dem Folgematerial die Extrusionsvorrichtung betrieben, bis der größte Teil des alten Materials der Schmelze ausgespült worden ist.

Da bei Schmelzekanälen im Randbereich dieser Schmelzekanäle die Transportgeschwindigkeit im Wesentlichen gleich null ist, das alte Material dort sozusagen anhaftet, ist der Spülvorgang sehr zeitaufwendig. Bei Blasextrusionsvorrichtungen mit einem Durchsatz von bis zu ca. 120 kg Schmelze pro Stunde kann dabei ein Spülvorgang üblicherweise 20 min. bis 1,5 Std. in Anspruch nehmen. Für jede Folienschicht, für welche ein Materialwechsel erfolgen soll, führt dies demnach zu 120 kg oder mehr Ausschussmaterial der Schmelze. Bei mehreren Folienschichten multipliziert sich diese Menge mit der Anzahl der Folienschichten, auch wenn nur eine einzige Folienschicht gespült wird. Damit können Ausschussraten von bis zu 1000 kg erreicht werden. Gleichzeitig stellt die Spülzeit eine Totzeit für die Maschine dar, in welcher keine verwertbare Produktion stattfinden kann. Dementsprechend sind bekannte Extrusionsvorrichtungen aus den Druckschriften DE10027653 A1, US 2011/001267 A1 und DE3245084 A1 mit dem entsprechenden Spülverfahren hinsichtlich des Zeitaufwandes und hinsichtlich der entstehenden Kosten sowie des Materialausschusses mit deutlich erkennbaren Nachteilen behaftet.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Zeit für den Spülvorgang zu reduzieren.

Voranstehende Aufgabe wird gelöst durch eine Wendevorrichtung mit den Merkmalen des Anspruchs 1, einen Blaskopf mit den Merkmalen des Anspruchs 11 sowie ein Verfahren mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Wendevorrichtung beschrieben sind, selbstverständlich auch im Zusammenhang mit dem erfindungsgemäßen Blaskopf sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Eine erfindungsgemäße Wendevorrichtung dient dem Wenden einer Schmelze in einem Schmelzekanal. Hierfür weist die Wendevorrichtung einen Schmelzeeingang und einen Schmelzeausgang auf, wobei zwischen dem Schmelzeeingang und dem Schmelzeausgang zumindest ein Schmelzeführungsmittel angeordnet ist. Das Schmelzeführungsmittel dient einem Umschichten von Schmelze aus der Mitte des Schmelzeeingangs an den Rand des Schmelzeausgangs. Weiter ist das Schmelzeführungsmittel ausgebildet für ein Umschichten von Schmelze vom Rand des Schmelzeeingangs in die Mitte des Schmelzeausgangs.

Unter der Mitte des Schmelzekanals ist dabei grundsätzlich jeder Bereich zu verstehen, der vom Rand beabstandet ist. Insbesondere erfolgt also ein Umschichten vom Rand weg. Beispielsweise kann die Mitte des Schmelzeausgangs der gesamte Schmelzeausgangsbereich mit einem Abstand von ca. 5mm zum Rand sein.

Durch eine erfindungsgemäße Wendevorrichtung erfolgt also automatisch ohne bewegbare Teile durch eine aktive Führung mithilfe der Schmelzeführungsmittel ein Umschichten der Schmelze im Schmelzekanal. Die Wendevorrichtung kann in den Schmelzekanal eingesetzt werden oder einen Teil des Schmelzekanals ausbilden. Über den Schmelzeeingang ist eine fluidkommunizierende Verbindung zum Schmelzekanal hergestellt, so dass die Schmelze über den Schmelzeeingang in die Wendevorrichtung einströmen kann. Nachdem der Schmelzeeingang passiert ist, wird die Schmelze über die Schmelzeführungsmittel in erfindungsgemäßer Weise umgeschichtet. Am Schmelzeausgang wird die umgeschichtete Schmelze die Wendevorrichtung wieder verlassen und über die fluidkommunizierende Verbindung im Schmelzekanal weiterströmen.

Erfindungsgemäß sind die Schmelzeführungsmittel ausgebildet für das Umschichten der Schmelze. Dabei werden zwei grundsätzliche Schichtfunktionalitäten zur Verfügung gestellt. Zum einen wird am Schmelzeeingang die Schmelze aus der Mitte verwendet und an den Rand des Schmelzeausgangs geführt. Gleichzeitig und über die gleiche Länge erfolgt ein Umschichten der Schmelze vom Rand des Schmelzeeingangs in die Mitte des Schmelzeausgangs. Somit wird das Material aus der Mitte am Schmelzeeingang mit dem Material am Rand des Schmelzeeingangs vertauscht, so dass am Schmelzeausgang eine komplett umgeschichtete Schmelzeschichtsituation vorliegt.

Eine erfindungsgemäße Wendevorrichtung reduziert nun die Spülzeit beim Einsatz in einer Extrusionsvorrichtung erheblich. So ist in einer Spülsituation in der Extrusionsvorrichtung davon auszugehen, dass altes Schmelzematerial im Bereich des Randes des Schmelzekanals länger verbleibt als in der Mitte. So wird während des Spülvorgangs relativ zügig die Mitte des Schmelzekanals mit komplett frischem und damit neuem Schmelzematerial ausgefüllt sein, während am Rand immer noch ein hoher Anteil altes Material haften bleibt. Durch den Einsatz der erfindungsgemäßen Wendevorrichtung erfolgt nun ein Umschichten dieses alten Materials vom Rand des Schmelzekanals in die Mitte des Schmelzekanals und damit in den Bereich der schnellen bzw. höheren Durchströmungsquote. Dies führt dazu, dass sozusagen altes Schmelzematerial vor der Wendevorrichtung in die Mitte des Schmelzekanals nach der Wendevorrichtung umgeschichtet wird, so dass es nun in der Mitte schneller abtransportiert werden kann. Dadurch, dass dieses Umschichten in erfindungsgemäßer Weise erfolgt, kann eine deutliche Reduktion der Spülzeit durch ein schnelleres Ausbringen des alten Materials aus dem Schmelzekanal erzielt werden.

Insbesondere kann durch eine erfindungsgemäße Wendevorrichtung eine Reduktion um bis zu 50 % der gesamten Spülzeit erhalten werden. Ein weiterer Vorteil ist die Reduktion der Verweildauer der Schmelze am Rand auch im normalen Betrieb. Auf diese Weise lässt sich die thermische Beeinflussung auf das Material reduzieren wodurch Materialbeeinträchtigungen reduziert oder sogar vermieden werden.

Die Wendevorrichtung kann dabei in dem Schmelzekanal eingesetzt sein oder den Schmelzekanal ausbilden. Selbstverständlich können auch in einem Schmelzekanal zwei oder mehr Wendevorrichtungen mit definiertem Abstand vorgesehen sein. Bevorzugt ist es, wie es später noch näher erläutert wird, wenn die Wendevorrichtung sich bezogen auf die Länge des Schmelzekanals im Wesentlichen mittig angeordnet in diesem befindet.

Die Schmelzeführung mithilfe der Schmelzeführungsmittel kann dabei in unterschiedlichster Weise ausgestaltet sein. So können die später noch erläuterten Funktionen in einer Aufteilung genauso durch ein Schmelzeführungsmittel zur Verfügung gestellt werden, wie dies durch aktive Führungskanäle innerhalb des Schmelzekanals denkbar ist. Diese beiden unterschiedlichen Wendefunktionalitäten werden nachfolgend näher erläutert.

Erfindungsgemäß weist das zumindest eine Schmelzeführungsmittel einen ersten Führungskanal mit einer Führungsöffnung in der Mitte des Schmelzeeingangs und wenigstens einem Führungsausgang am Rand des Schmelzeausgangs auf. Hier erfolgt also ein aktives Wenden innerhalb eines einzigen Schmelzekanals, so dass auch ein Einbau einer separaten Wendevorrichtung in eine bestehende Geometrie eines Schmelzekanals denkbar wird. Durch das Aufnehmen in der Führungsöffnung wird nun das neue bzw. frische Material der Schmelze an den Rand geführt und dort über den Führungsausgang am Schmelzeausgang ausgegeben. Dort verdrängt es nun das dort befindliche alte Material in die Mitte, so dass durch ein passives Verschieben hier ein komplettes Umschichten erzielbar wird. Selbstverständlich kann jedoch auch eine Bewegung des alten Materials vom Rand in die Mitte aktiv erfolgen, wie dies durch einen zweiten Führungskanal im nachfolgenden Absatz näher erläutert wird. Unter einem Führungskanal kann ein vollständig geschlossener Kanal verstanden werden. Jedoch sind auch seitlich teilweise geöffnete Führungskanäle in Form von sogenannten Rutschen oder Rampen im Sinne der vorliegenden Erfindung als Führungskanal zu verstehen. Dementsprechend können auch die Führungsöffnung und der Führungsausgang jeweils eine komplett umrandete Geometrie aufweisen oder mit einer seitlichen Öffnung versehen sein.

Ein erfindungsgemäßer Vorteil ist, dass bei der Wendevorrichtung gemäß dem voranstehenden Absatz das zumindest eine Schmelzeführungsmittel einen zweiten Führungskanal aufweist mit einem Führungsausgang in der Mitte des Schmelzeausgangs und wenigstens einer Führungsöffnung am Rand des Schmelzeeingangs. Damit dient der zweite Führungskanal sozusagen zur umgekehrten Funktionalität wie der erste Führungskanal. Über die Führungsöffnung kann nun Schmelze und damit altes Material der Schmelze vom Rand am Schmelzeeingang aufgenommen und aktiv mit dem zweiten Führungskanal in die Mitte über den Führungsausgang am Schmelzeausgang geführt werden. Damit wird nicht nur durch Verdrängen, sondern durch aktives Führen und Umschichten die entsprechende erfindungsgemäße Umschichtung vom Rand zur Mitte und von der Mitte zum Rand möglich. Die Kombination von zwei Führungskanälen ist dabei vorzugsweise parallel vorgesehen, so dass die Führungsöffnung des ersten Führungskanals und die Führungsöffnung des zweiten Führungskanals in Strömungsrichtung an gleicher oder im Wesentlichen gleicher Stelle der Wendevorrichtung angeordnet sind. Gleichzeitig ist es vorteilhaft, wenn auch der Führungsausgang des ersten Führungskanals und der Führungsausganges des zweiten Führungskanals in Bezug auf die Strömungsrichtung an gleicher oder im Wesentlichen gleicher Position am Schmelzeausgang angeordnet sind. Ebenfalls vorteilhaft ist es, wenn alle Führungskanäle des zumindest einen Schmelzeführungsmittels den gleichen oder im Wesentlichen gleichen freien Strömungsquerschnitt aufweisen, um eine saubere Umschichtung, insbesondere mit definierten Volumenströmen gewährleisten zu können. Dabei sind die einzelnen Strömungsquerschnitte vorzugsweise ausgebildet gleiche oder im Wesentlichen gleiche Strömungsgeschwindigkeiten zur Verfügung stellen zu können. Damit wird ein unerwünschtes Abreißen einzelner Schichten voneinander mit hoher Wahrscheinlichkeit und damit mit großer Sicherheit vermieden.

Erfindungsgemäß ist bei der Wendevorrichtung die Führungsöffnung des zweiten Führungskanals fluidkommunizierend mit einem Ringsammler verbunden, welcher vollumfänglich am Umfang des Schmelzeeingangs angeordnet ist. Ein Ringsammler ist also eine konstruktive Ausgestaltung, welche es ermöglicht, zumindest teilweise umlaufend am Rand des Schmelzeeingangs das dort entlangströmende Schmelzematerial aufzunehmen. Dies führt dazu, dass eine einzige, dezentrale Führungsöffnung des zweiten Führungskanals ausreicht, um vollumfänglich, das Schmelzematerial aufzunehmen und zu dieser einen Führungsöffnung zu leiten. Selbstverständlich sind Ringsammler auch kombinierbar mit zwei oder mehr Führungsöffnungen, so dass sie nur einen Teil des Umfangs überbrücken müssen. Um die Führungsfunktion vorzugsweise im Wesentlichen automatisch gewährleisten zu können, ist die Führungsöffnung insbesondere in Strömungsrichtung der Schmelze dem Beginn des Ringsammlers nachgeordnet angeordnet. Darunter ist zu verstehen, dass durch die Strömung die Schmelze zuerst in einem ersten Abschnitt des Ringsammlers aufgenommen wird und dann durch die Weiterbewegung an diesem Ringsammler entlang zur Führungsöffnung abgleitet bzw. weitergeleitet wird. Dieser Versatz in axialer Richtung bzw. in Strömungsrichtung erlaubt es also, eine Reduktion des konstruktiven Aufwandes der gesamten Wendevorrichtung zu ermöglichen. Der Ringsammler ist demnach in der Lage, die Führungsöffnung auch teilweise auszubilden. So ist es denkbar, dass die Führungsöffnung in den Ringsammler übergeht bzw. umgekehrt.

Erfindungsgemäß weist bei der Wendevorrichtung der Ringsammler eine Sammelbreite auf, welche größer der Öffnungsbreite der Führungsöffnung des zweiten Führungskanals ausgebildet ist. Dies führt zu strömungstechnischen Vorteilen. So wird die Randschicht in einem größeren Abstand zum Rand des Schmelzeeingangs in den Ringsammler mit aufgenommen und anschließend durch die sich verengende Ausbildung des Ringsammlers zur Führungsöffnung hin beschleunigt. Dies führt durch die Verengung des Querschnitts in der Führungsöffnung zu verbessertem Strömungsverhalten und insbesondere zu einer Reduktion des Druckverlustes des gesamten Systems. Gleichzeitig wird durch diese Beeinflussung der Strömung sichergestellt, dass an dem Austrittsende, also auf der Seite des Schmelzeausgangs, hohe Geschwindigkeitsunterschiede der kombinierenden Strömungen vermieden werden. Schichtabriss wird an diesen Stellen mit hoher Wahrscheinlichkeit vermieden, so dass die gesamte Produktion mit höherer Geschwindigkeit und gleichzeitig mit höherer Qualität betrieben werden kann.

Ein weiterer Vorteil kann es sein, wenn bei einer erfindungsgemäßen Wendevorrichtung der Führungsausgang des ersten Führungskanals fluidkommunizierend mit einem Ringverteiler verbunden ist, welcher im Wesentlichen vollumfänglich am Umfang des Schmelzeausgangs angeordnet ist. Der Ringverteiler ist vorzugsweise hinsichtlich seiner geometrischen Ausbildung identisch oder im Wesentlichen identisch wie der Ringsammler ausgebildet. Der Ringverteiler erfüllt im Wesentlichen die gleiche Funktion wie der Ringsammler, jedoch dient er dazu, die geführte Schmelze nun auf den Rand zu verteilen. Damit ist der Ringverteiler ebenfalls vorzugsweise in Strömungsrichtung axial dem Führungsausgang nachgelagert. Sobald also die Schmelze aus dem ersten Führungskanal den Führungsausgang verlassen hat, übernimmt der Ringverteiler die entsprechende Verteilung umfänglich um den Rand des Schmelzeausgangs. Dies führt ebenfalls zu dem Vorteil, dass im Schmelzeausgang ein einziger Führungsausgang ausreichend ist, um einen großen Umfangsteil oder sogar den kompletten Umfang des Schmelzeausgangs für die Umschichtung mit der Schmelze zu versorgen. Dabei kann vorzugsweise der Abstand zwischen dem Führungsausgang und dem Ende des Ringverteilers rampenförmig überwunden werden, so dass eine kontinuierliche, umfängliche Verteilung der Schmelze, welche aus dem Führungsausgang ausgetreten ist, erfolgen kann. Damit werden die gleichen Vorteile auch durch den Ringverteiler erzielt, wie sie bereits bezüglich des Ringsammlers beschrieben worden sind.

Eine Wendevorrichtung nach dem voranstehenden Absatz lässt sich dahingehend weiterbilden, dass der Ringverteiler eine Verteilbreite aufweist, welche größer als die Öffnungsbreite des Führungsausgangs des ersten Führungskanals ausgebildet ist. Auch hier ist wieder eine strömungstechnische Optimierung vorgesehen, wie sie in ähnlicher bzw. identischer Weise bereits zum Ringsammler beschrieben worden ist. Die Verbreiterung der Öffnungsbreite ausgehend von dem Führungsausgang zur Verteilbreite reduziert die Strömungsgeschwindigkeit der Schmelze im Ringverteiler, so dass nunmehr für das Zusammenführen der unterschiedlichen Schichten zwischen den Führungsausgängen der Führungskanäle Geschwindigkeitsunterschiede der Strömung reduziert oder sogar gänzlich vermieden werden. Dies führt bei der Kombination im Schmelzeausgang für die Schichten zu einer reduzierten Wahrscheinlichkeit von Schichtabriss. Damit wird ebenfalls die Qualität bei der Produktion und insbesondere bei der Förderung der Schmelze weiter verbessert. Auf diese Weise ist es auch möglich, mit höheren Fördergeschwindigkeiten und damit mit höheren Produktionsgeschwindigkeiten zu arbeiten, ohne das Risiko von Qualitätseinbußen eingehen zu müssen.

Vorteilhaft ist es darüber hinaus, wenn bei einer erfindungsgemäßen Wendevorrichtung der Schmelzeeingang, der Schmelzeausgang und das zumindest eine Schmelzeführungsmittel totraumarm, insbesondere totraumfrei ausgebildet sind. Toträume sind im Sinne der vorliegenden Erfindung Bereiche der Wendevorrichtung, welche mit einer sehr geringen Strömungsgeschwindigkeit, insbesondere einer Strömungsgeschwindigkeit nahezu null, durchströmt werden. Mit anderen Worten können Toträume zum Beispiel durch Verschneidungen gebildet werden, in welchen sich Schmelzematerial ablagert und nicht durch weiteres Strömen wegtransportiert wird. Die Reduktion von Toträumen bzw. das Vermeiden von Toträumen bei einer erfindungsgemäßen Wendevorrichtung führt zu einer weiteren Reduktion der Spülzeit und insbesondere zu einer größeren Wartungsfreiheit der Wendevorrichtung selbst. Insbesondere hinsichtlich der Reinigungsmöglichkeit der Wendevorrichtung ist die Reduktion der Toträume von großem Vorteil. Nicht zuletzt können Toträume in Form von Hinterschneidungen auch zu unerwünschter Wirbelbildung in der Strömung der Schmelze führen, wodurch durch die Totraumärme bzw. die Totraumfreiheit der Wendevorrichtung die Strömung leichter und damit mit geringerem Druckverlust die Wendevorrichtung passieren kann.

Vorteilhaft ist es ebenfalls, wenn bei einer erfindungsgemäßen Wendevorrichtung der Durchmesser des freien Strömungsquerschnitts des Schmelzeeingangs und/oder des Schmelzeausgangs mit der Länge der Wendevorrichtung in Durchströmungsrichtung in einem der folgenden Verhältnisse steht:
- 1:1
- 40:50
- 32:40
- 20:30

Bei der voranstehenden Liste handelt es sich um eine nicht abschließende Aufzählung. Allgemein ist es bevorzugt, wenn das Verhältnis im Bereich zwischen 1:1 und 1:5 liegt. Vorzugsweise ist das Verhältnis bei ca. 1:1,25 ausgebildet. Die Verhältnismöglichkeiten der Liste beschreiben optimierte bzw. ideale Kombinationen hinsichtlich der Länge und des Durchmessers des freien Strömungsquerschnittes. Mit anderen Worten wird auf möglichst kurzer Länge eine Reduktion des Druckverlustes bei verbesserter Umschichtleistung gewährleistet. Insbesondere wird für die Umlenkung, welche für die Strömung der Schmelze notwendig ist, um die Umschichtung zu erzielen, bei kürzerer Bauweise der Wendevorrichtung ein stärkerer Umlenkwinkel notwendig. Gleichzeitig wird jedoch bei besonders langer Ausführung der Wendevorrichtung ein hoher Druckverlust durch eine lange Strömungslänge erzeugt. Die voranstehend beschriebenen Verhältnismöglichkeiten bieten ideale Kompromisse zwischen einer möglichst kurzen Ausbildung der Wendevorrichtung hinsichtlich des sich einstellenden Druckverlustes und einer möglichst sanften Umlenkung bei der Durchströmung für das Umschichten in der Wendevorrichtung.

Vorteilhaft ist es weiter, wenn bei einer erfindungsgemäßen Wendevorrichtung zwischen dem Schmelzeeingang und dem Schmelzeausgang im Bereich des zumindest einen Schmelzeführungsmittels ein vergrößerter Außendurchmesser ausgebildet ist für einen freien Strömungsquerschnitt, in dem zumindest einen Schmelzeführungsmittel, welcher dem freien Strömungsquerschnitt im Schmelzeeingang und/oder im Schmelzeausgang entspricht oder im Wesentlichen entspricht. Mit anderen Worten weist die Wendevorrichtung eine Dickenvergrößerung bzw. eine Durchmesservergrößerung auf. Dies führt dazu, dass zwischen dem Schmelzeeingang und dem Schmelzeausgang keine Reduktion des freien Strömungsquerschnittes stattfindet. Unter einem freien Strömungsquerschnitt ist im Sinne der vorliegenden Erfindung der Querschnitt eines durchströmten Bauteils zu verstehen, welcher als freie Strömungsfläche quer zur Strömungsrichtung der Schmelze in diesem Bauteil zur Verfügung steht. Bei einem zylindrischen Rohr ist dementsprechend auch der freie Strömungsquerschnitt der kreisförmige Innenquerschnitt senkrecht zur Zylinderachse dieses zylindrischen Rohres. Die Aufweitung des Außendurchmessers führt also dazu, dass zwischen Schmelzeeingang und Schmelzeausgang in Summe ein konstanter freier Strömungsquerschnitt bestehen bleibt. Ist darüber hinaus vorzugsweise der Schmelzeeingang und/oder der Schmelzeausgang mit dem gleichen oder im Wesentlichen dem gleichen Strömungsquerschnitt ausgebildet, wie dies bei dem angeordneten Schmelzekanal der Fall ist, so führt dies zu einem konstanten oder im Wesentlichen konstanten freien Strömungsquerschnitt durchgängig für den gesamten Schmelzekanal. In Summe kann auf diese Weise der Druckverlust durch die erfindungsgemäße Wendevorrichtung noch weiter minimiert werden und dementsprechend der nachteilige Druckverlust durch die erfindungsgemäße Wendevorrichtung deutlich reduziert werden.

Ein weiterer Vorteil ist erzielbar, wenn bei einer erfindungsgemäßen Wendevorrichtung der erste Führungskanal und/oder der zweite Führungskanal im Verlauf einen Umlenkungsabschnitt aufweisen mit einem Anstellwinkel zur Strömungsrichtung der Schmelze im zumindest einen Schmelzeführungsmittel von weniger als 90°, insbesondere im Bereich von ca. 70°. Je niedriger der Anstellwinkel für den Umlenkungsabschnitt ausgebildet ist, umso geringer ist auch die negative Einwirkung auf die Strömungsgeschwindigkeit bzw. der sich einstellende Strömungswiderstand. Je steiler der Anstellwinkel im Umlenkungsabschnitt gewählt wird, umso kürzer ist die axiale Länge in Strömungsrichtung für die Bauweise der Wendevorrichtung. Bevorzugt ist es, um für die Reduktion des Druckverlustes eine verbesserte Bauform zu gewährleisten, wenn ein Anstellwinkel von weniger als 90° gewählt wird. Auf diese Weise wird es auch möglich, unerwünschte Toträume zu reduzieren oder sogar gänzlich zu vermeiden. Bevorzugt ist im Sinne der vorliegenden Erfindung ein Anstellwinkel im Bereich von ca. 70°, also insbesondere im Bereich zwischen ca. 65° und ca. 75°. Dies führt zu einer besonders kompakten und dementsprechend kurzen Bauweise der Wendevorrichtung und gleichzeitig zu einer akzeptablen negativen Beeinflussung der Strömungsgeschwindigkeit durch den Widerstand für die Strömung mittels des Umlenkabschnitts.

Vorteilhaft ist es weiter, wenn bei einer erfindungsgemäßen Wendevorrichtung das zumindest eine Schmelzeführungsmittel ausgebildet ist für eine Druckerhöhung der Schmelze, um einen Faktor im Bereich zwischen ca. 5 und ca. 20. Wie bereits erläutert worden ist, stellt die Wendevorrichtung ein Strömungshindernis für die Schmelze dar. Basierend auf der geometrischen Ausbildung, im Einzelnen der Länge und der Einbauten der Wendevorrichtung, stellt sich dementsprechend zwischen dem Schmelzeeingang und dem Schmelzeausgang ein Druckverlust ein. Erfindungsgemäß ist dieser Druckverlust limitiert auf den Faktor von maximal ca. 20 zwischen dem Schmelzeeingang und dem Schmelzeausgang. Bevorzugt ist es jedoch, wenn der Druckverlust reduziert wird, auf einen optimalen Wert im Bereich von ca. 5 als Faktor für den Druckverlust zwischen Schmelzeeingang und Schmelzeausgang. Damit wird selbstverständlich auch eine Materialabhängigkeit definiert. So ist der Bereich zwischen dem Faktor ca. 5 und dem Faktor ca. 20 auch auf eine einzelne Wendevorrichtung anwendbar, so dass diese Wendevorrichtung für die einzusetzenden unterschiedlichen Materialien mit unterschiedlichen Viskositäten im Schmelzekanal diesen Bereich des Faktors für den Druckverlust nicht oder im Wesentlichen nicht verlässt. Dieser Faktor für die Druckerhöhung bezieht sich dabei auf einen Vergleich mit einer Rohrleitung gleicher Länge ohne die Wendevorrichtung.

Vorteilhaft ist es ebenfalls, wenn bei einer erfindungsgemäßen Wendevorrichtung das zumindest eine Schmelzeführungsmittel, der Schmelzeeingang und/oder der Schmelzeausgang wenigstens abschnittsweise mit einer Schutzbeschichtung, insbesondere einer Korrosionsschutzbeschichtung, insbesondere aufweisend Nickel, beschichtet ist. Beim Durchströmen mit hochviskosem Medium, also einem geschmolzenen Kunststoff in Form der Schmelze, entstehen hohe Reibungskräfte an der Wand des Schmelzekanals und damit auch an den Wänden innerhalb der Wendevorrichtung. Um eine möglichst hohe Einsatzdauer und insbesondere einen geringen Verschleiß für die Wendevorrichtung sicherstellen zu können, sind Korrosionsschutzbeschichtungen einsetzbar, um die Reibung an den Wänden zu reduzieren und gleichzeitig die Widerstandsfähigkeit des Materials an den Wänden zu erhöhen. Die Verwendung von Nickel hat sich als besonders vorteilhaft herausgestellt, da im Vergleich zwischen den Kosten im Materialeinsatz und für das Aufbringen der Korrosionsschicht hier eine sehr hohe Verschleißminimierung innerhalb der Wendevorrichtung erzielbar ist.

Ein weiterer Vorteil kann es sein, wenn bei einer erfindungsgemäßen Wendevorrichtung das zumindest eine Schmelzeführungsmittel und/oder der Schmelzeeingang und/oder der Schmelzeausgang, insbesondere die gesamte Wendevorrichtung, durch ein aufbauendes Verfahren hergestellt ist. Unter einem aufbauenden Verfahren sind insbesondere sogenannte 3D-Druckverfahren bzw. Rapid-Prototyping-Verfahren zu verstehen. So kann zum Beispiel durch schichtweises Aufbauen eine beliebig komplexe Geometrie erzeugt werden. Eine Möglichkeit für ein derartiges aufbauendes Verfahren ist beispielsweise ein schichtweises Lasersintern aus Metallpulver, so dass auch komplexeste Formen, welche durch Gussverfahren nur schwer erzielbar wären, auf diese Weise kostengünstig und einfach hergestellt werden können. Nicht zuletzt erlaubt dies eine größere Konstruktionsfreiheit bei den einzelnen Formgestaltungen und Formgebungen innerhalb der Wendevorrichtung. Insbesondere für eine Erzielung von totraumarmen bzw. totraumfreien Bereichen innerhalb der Wendevorrichtung kann ein aufbauendes Verfahren große Vorteile mit sich bringen.

Ein weiterer Vorteil ist erzielbar, wenn bei einer erfindungsgemäßen Wendevorrichtung eine Verschiebevorrichtung vorgesehen ist für ein Verschieben der Wendevorrichtung zwischen einer ersten Position und einer zweiten Position. In der ersten Position befinden sich der Schmelzeeingang und der Schmelzeausgang in fluidkommunizierender Verbindung mit dem Schmelzekanal. In der zweiten Position sind der Schmelzeeingang und der Schmelzeausgang von dem Schmelzekanal getrennt. Damit kann die Verschiebevorrichtung zum Beispiel translatorisch, rotatorisch oder in kombinierter Weise eine Bewegung der Wendevorrichtung durchführen. Insbesondere wird dabei für die Wendevorrichtung in der zweiten Position ein Rohrstück bzw. ein Kanalstück vorgesehen, welches die beiden verbleibenden Endabschnitte des Schmelzekanals fluidkommunizierend miteinander verbindet. Die Verschiebevorrichtung erlaubt es also, die Umschichtfunktion sozusagen durch das Einschieben der Wendevorrichtung einzuschalten und durch das Ausschieben der Wendevorrichtung auszuschalten. Da die Wendevorrichtung durch ihre Wendefunktionalität eine entsprechende Druckverlustsituation erzeugt, ist es vorteilhaft, im normalen Betrieb diese Wendefunktion auszuschalten. Damit wird der erhöhte Druckverlust ausschließlich während des Spülvorgangs eingesetzt, um die entsprechende Umschichtfunktion zu gewährleisten. Der erhöhte Druckverlust der Wendevorrichtung wird durch das Herausschieben der Wendevorrichtung in die zweite Position im Normalbetrieb ausgeschaltet und kann dementsprechend nicht mehr weiter stören.

Vorteilhaft ist es weiter, wenn bei einer erfindungsgemäßen Wendevorrichtung der Schmelzeeingang und der Schmelzeausgang einen freien Strömungsquerschnitt aufweisen, welcher dem freien Strömungsquerschnitt des Schmelzekanals entspricht oder im Wesentlichen entspricht. Mit anderen Worten wird stufenlos und ohne Kante oder Durchmesservariation eine fluidkommunizierende Verbindung zwischen Schmelzeeingang und Schmelzekanal bzw. zwischen Schmelzeausgang und Schmelzekanal möglich. Eine solche Wendevorrichtung kann komplett in den Schmelzekanal eingesetzt werden bzw. den Schmelzekanal sogar teilweise ausbilden. Unter einem freien Strömungsquerschnitt ist dabei der Querschnitt senkrecht zur Strömung an der jeweiligen Position zu verstehen. Mit anderen Worten bildet der freie Strömungsquerschnitt die Strömungsquerschnittsfläche aus, über welche der Volumenstrom der Schmelze strömen kann.

Vorteilhaft ist es weiter, wenn bei einer erfindungsgemäßen Wendevorrichtung der freie Strömungsquerschnitt das Schmelzeführungsmittel dem freien Strömungsquerschnitt des Schmelzeeingangs und/oder dem freien Strömungsquerschnitt des Schmelzeausgangs entspricht oder im Wesentlichen entspricht. Insbesondere ist diese Ausführungsform kombiniert mit der Ausführungsform gemäß dem voranstehenden Absatz. Der Strömungsquerschnitt der Schmelzeführungsmittel ist dabei vorzugsweise die Summe sämtlicher Schmelzeführungsmittel. Durch dieses Entsprechen wird also ein konstanter freier Strömungsquerschnitt zur Verfügung gestellt, so dass der Druckverlust durch Querschnittseinengungen vermieden oder im Wesentlichen vermieden wird. Dies reduziert den sich einstellenden Druckverlust beim Durchströmen mit Schmelze deutlich. Es verbleibt ausschließlich oder im Wesentlichen ausschließlich ein Druckverlust, welcher durch die entsprechende Einwirkung auf die Strömungsrichtung und damit einhergehend durch das aktive Umschichten der Schmelze erzeugt wird. So kann beispielsweise eine Aufweitung des Schmelzekanals eine solche geometrische Korrelation im Bereich der Wendevorrichtung erlauben. Auch ist es denkbar, dass beim Aufteilen in einem Teilungsabschnitt eine entsprechende Anpassung der Strömungsquerschnitte durch die entsprechende Durchmesser der Teilkanäle zur Verfügung gestellt werden.

Ebenfalls Gegenstand der vorliegenden Erfindung ist ein Blaskopf für das Durchführen eines Blasfolienextrusionsverfahrens. Ein solcher Blaskopf weist zumindest einen Schmelzekanal für die Förderung von Schmelze zu einem Blasausgang des Blaskopfs auf. Ein erfindungsgemäßer Blaskopf zeichnet sich dadurch aus, dass in dem zumindest einen Schmelzekanal wenigstens eine Wendevorrichtung gemäß der vorliegenden Erfindung angeordnet ist. Damit bringt ein erfindungsgemäßer Blaskopf die gleichen Vorteile mit sich, wie sie ausführlich mit Bezug auf eine erfindungsgemäße Wendevorrichtung erläutert worden sind. Der Schmelzekanal steht dabei in fluidkommunizierender Verbindung mit dem Schmelzeeingang und dem Schmelzeausgang der Wendevorrichtung. Insbesondere ist ein solcher Blaskopf mit zwei oder mehr Schmelzekanälen für unterschiedliche Schichten der Blasfolie vorgesehen. Die Wendevorrichtung ist vorzugsweise in gleicher oder identischer Ausgestaltung in sämtlichen Schmelzekanälen angeordnet, um für alle Schmelzekanäle die gleiche Spülzeitreduktion in erfindungsgemäßer Weise zur Verfügung stellen zu können.

Ein Blaskopf gemäß dem voranstehenden Absatz lässt sich dahingehend weiterbilden, dass die Wendevorrichtung bezogen auf die Länge des Schmelzekanals in der Mitte oder im Wesentlichen in der Mitte des Schmelzekanals angeordnet ist. Dabei handelt es sich um eine optimierte Positionierung der Wendevorrichtung, welche die maximale Reduktion der Spülzeit um ca. 50 % erlaubt. Selbstverständlich sind auch zwei oder mehr Wendevorrichtungen möglich, welche vorzugsweise mit gleicher bzw. identischer Teilung in dem jeweiligen Schmelzekanal eingesetzt sind.

Bei einem erfindungsgemäßen Blaskopf ist es auch denkbar, dass bei einer Kombination von zwei oder mehr Wendevorrichtungen hintereinander jede Wendevorrichtung nur einen Teil des jeweiligen Randes abdeckt und damit nur von diesem Teil des Randes die Schmelze in die Mitte umschichtet. Dabei kann vorzugsweise jede Wendevorrichtung die Umschichtung für einen anderen Umfangsabschnitt durchführen, so dass nach dem passieren aller Wendevorrichtungen Schmelze vom vollumfänglichen Rand in die Mitte umgeschichtet worden ist. Beispielsweise können vier Wendevorrichtungen hintereinander jeweils 90° Umfang des Randes mit der Umschichtfunktion abdecken, so dass in Summe der gesamte Umfang von 360° umgeschichtet wird.

Ein weiterer Gegenstand der vorliegenden Erfindung ist ein Verfahren für die Durchführung eines Spülvorgangs in einem Blaskopf gemäß der vorliegenden Erfindung, aufweisend die folgenden Schritte:
- Einbringen einer Schmelze in einen Schmelzeeingang einer Wendevorrichtung, insbesondere gemäß der vorliegenden Erfindung,
- Umschichten von Schmelze aus der Mitte des Schmelzeeingangs an den Rand eines Schmelzeausgangs der Wendevorrichtung und
- Umschichten von Schmelze vom Rand des Schmelzeeingangs in die Mitte des Schmelzeausgangs.

Ein erfindungsgemäßes Verfahren bringt die gleiche erfindungsgemäße Funktionalität wie eine erfindungsgemäße Wendevorrichtung mit sich, so dass auch die gleichen Vorteile erzielt werden, wie sie ausführlich mit Bezug auf eine erfindungsgemäße Wendevorrichtung erläutert worden sind.

Selbstverständlich kann ein erfindungsgemäßer Blaskopf und/oder die entsprechende Wendevorrichtung auch in anderen Extrusionsanlagen, zum Beispiel in einer Folienextrusion, insbesondere in einer Flachfolienextrusion eingesetzt werde. Damit kann der Blaskopf grundsätzlich als Extrusionskopf ausgebildet sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine schematische Darstellung während eines Spülvorgangs bei bekannten Extrusionsvorrichtungen,
- Fig. 2: die Situation gemäß Fig. 1 beim Einsatz einer erfindungsgemäßen Wendevorrichtung,
- Fig. 3: eine Ausführungsform einer erfindungsgemäßen Wendevorrichtung,
- Fig. 4: die Ausführungsform der Fig. 3 mit weiterer Darstellung von Strömungsverhältnissen der Schmelze,
- Fig. 5: die Ausführungsform der Figuren 3 und 4 mit weiteren Abmessungen,
- Fig. 6: eine weitere Ausführungsform einer erfindungsgemäßen Wendevorrichtung,
- Fig. 7: eine weitere Ausführungsform einer erfindungsgemäßen Wendevorrichtung,
- Fig. 8: eine weitere Ausführungsform einer erfindungsgemäßen Wendevorrichtung,
- Fig. 9: eine weitere Ausführungsform einer erfindungsgemäßen Wendevorrichtung,
- Fig. 10: die Ausführungsform der Fig. 9 in einer weiteren Darstellung, und
- Fig. 11: eine Ausführungsform eines erfindungsgemäßen Blaskopfs.

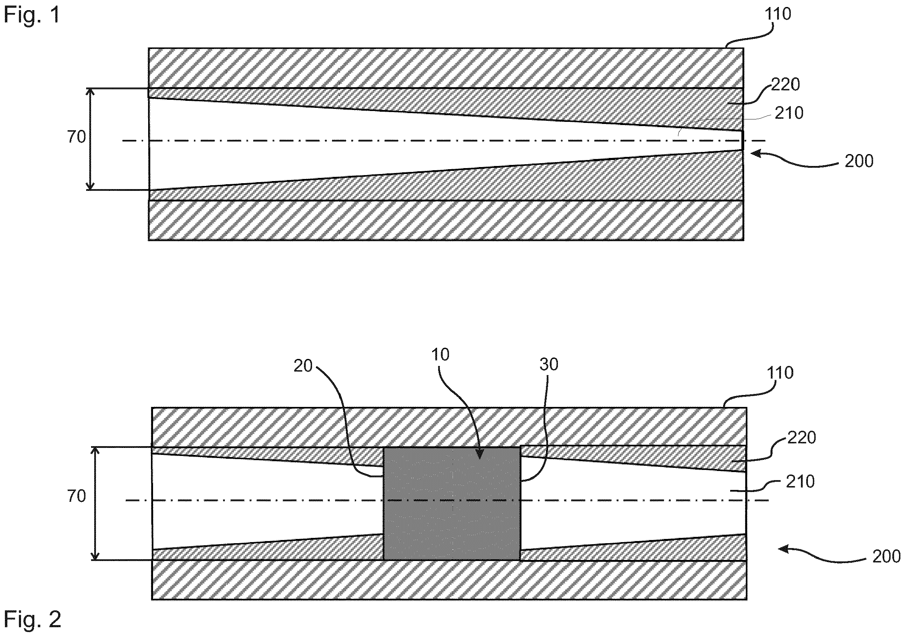

In Fig. 1 ist ein Schmelzekanal 110 mit einer Strömungsrichtung von links nach rechts dargestellt, wie er sich während des Spülvorgangs darstellt. Innerhalb des Schmelzekanals 110 ist ein freier Strömungsquerschnitt 70 vorgesehen, durch welchen Schmelze 200 strömt. Hier ist zu unterscheiden zwischen altem Schmelzematerial 220 und neuem Schmelzematerial 210. Hier ist gut zu erkennen, dass über den länglichen Verlauf des Schmelzekanals 110 während des Spülverlaufs sich eine rampenförmige bzw. konusförmige Ausbildung zwischen dem alten Schmelzematerial 220 und dem neuen Schmelzematerial 210 ausbildet. Dieser Konus wandert während der Spülzeit im Verlauf nach rechts, bis letztendlich der größte Teil des alten Schmelzematerials 220 ausgebracht worden ist und mit der aktiven Produktion weiter verfahren werden kann.

In Fig. 2 ist die Wirkungsweise einer erfindungsgemäßen Wendevorrichtung 10 dargestellt. Hier erfolgt nun ein Umschichten vom Rand der Schmelze 200 in die Mitte der Schmelze 200 und umgekehrt. Am Schmelzeeingang 20 der Wendevorrichtung 10 wird dementsprechend Material vom Rand der Schmelze 200 aufgenommen und in die Mitte am Schmelzeausgang 30 bereitgestellt. In umgekehrter Weise wird frisches bzw. neues Schmelzematerial 210 aus der Mitte am Schmelzeeingang 20 an den Rand des Schmelzeausgangs 30 geführt. Wie gut zu erkennen ist, reduziert sich damit die sich einstellende Menge an altem Schmelzematerial 220 am rechten Ende des Schmelzekanals 110. Die Darstellung der Fig. 2 ist zum gleichen Zeitpunkt während des Spülvorgangs erfolgt, wie bei Fig. 1.

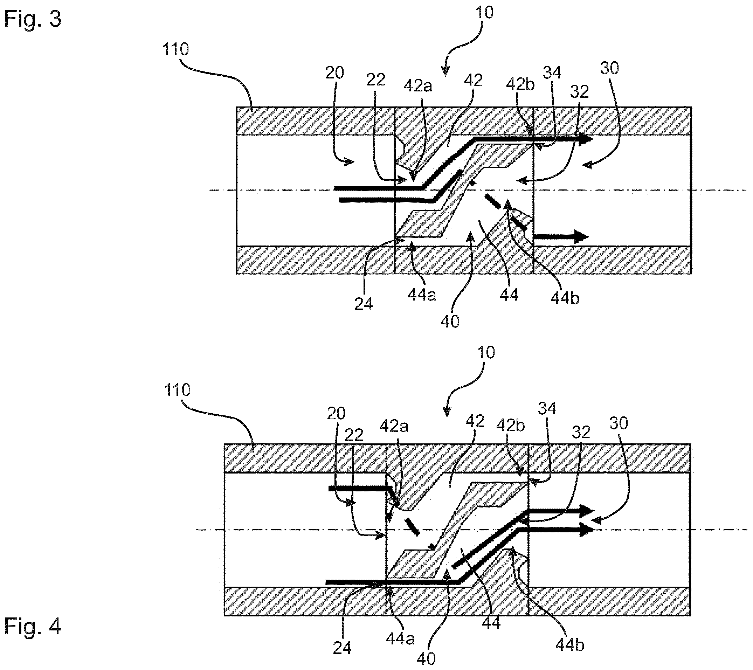

Die Fig. 3 und 4 zeigen eine erste Ausführungsform einer erfindungsgemäßen Wendevorrichtung 10. Diese Wendevorrichtung 10 ist mit zwei Führungskanälen 42 und 44 als Schmelzeführungsmittel 40 ausgestattet. Über einen nicht näher erläuterten Ringsammler wird eine Führungsöffnung 44a am Rand 24 des Schmelzeeingangs 20 zur Verfügung gestellt, so dass entsprechende Schmelze 200 dort in den zweiten Führungskanal 44 einströmen kann. Dies ist mit den Pfeilen in Fig. 4 dargestellt. Über einen Führungsausgang 44b in der Mitte 32 des Schmelzeausgangs 30 erfolgt nun die Umschichtung vom Rand in die Mitte für dieses Material der Schmelze 200.

In gleicher Weise ist in der Mitte 22 des Schmelzeeingangs 20 eine Führungsöffnung 42a des ersten Führungskanals 42 vorgesehen, welcher es ermöglicht entlang der Pfeile der Fig. 3 die Schmelze 200 an den Rand 34 des Schmelzeausgangs 30 und den entsprechenden Führungsausgang 42b umzuschichten. Hier handelt es sich um eine technische Lösung mittels eines aktiven Umschichtens, wobei die Wendevorrichtung 10 Bestandteil des Schmelzekanals 110 ist.

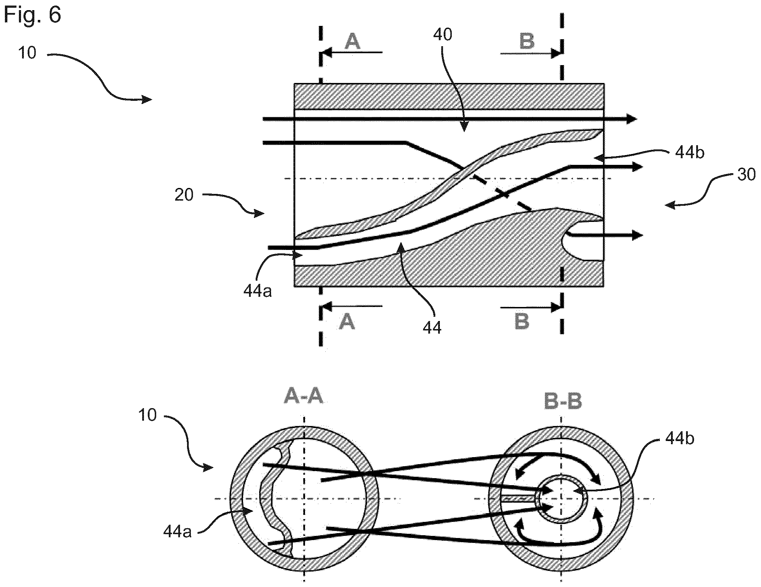

Die Fig. 6 zeigt eine reduzierte Komplexität hinsichtlich der Ausführungsformen der Fig. 3 bis 5. Hier ist nur ein abgeschlossener zweiter Führungskanal 44 mit entsprechender Führungsöffnung 44a und Führungsausgang 44b vorgesehen. Das übrige Material der Schmelze 200 wird vom Schmelzeeingang 20 entweder unberührt am oberen Ende durch die Schmelzeführungsmittel 40 hindurchgeführt bzw. an den unteren Rand geleitet. Die entsprechenden Schnitte A-A und B-B sind im unteren Bereich der Fig. 6 dargestellt, wobei dort ebenfalls die Pfeillinien die entsprechende Umschichtungsbewegung darstellen.

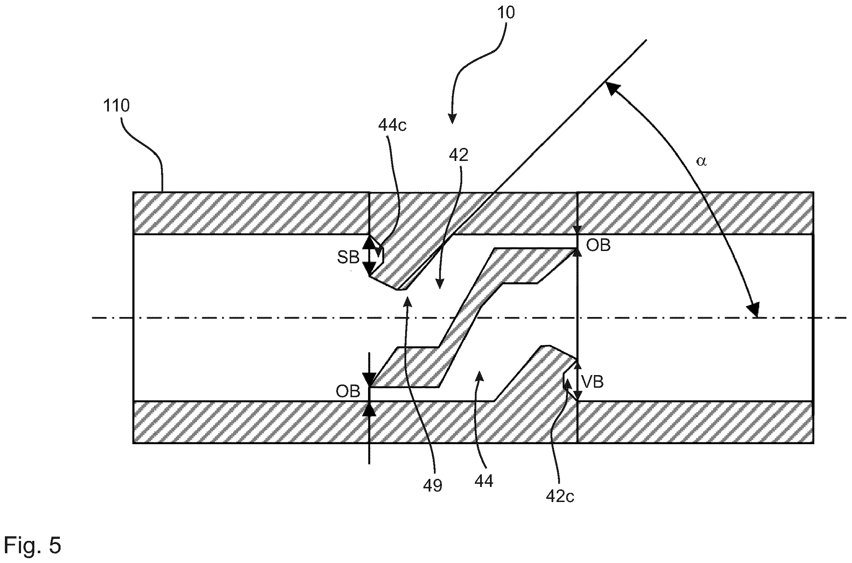

Die Fig. 5 zeigt die Ausführungsform der Fig. 3 und 4 in ähnlicher Darstellung, jedoch mit weiteren Einzelheiten. So ist auch hier im Schmelzekanal 110 die Wendevorrichtung 10 angeordnet. Hier ist gut zu erkennen, dass eine einzige Führungsöffnung 44a des zweiten Führungskanals 44 vorgesehen ist, mit einer Öffnungsbreite OB, welche im Verhältnis zu einer Sammlerbreite SB eines Ringsammlers 44c wie folgt steht. Die Sammlerbreite SB ist größer oder gleich, insbesondere größer als die Öffnungsbreite OB. In gleicher Weise ist auch die Öffnungsbreite OB eines Führungsausgangs 42b kleiner oder gleich, insbesondere kleiner als die Verteilbreite VB eines Ringverteilers 42c. Bei dieser Ausführungsform ist also zu erkennen, dass der Ringsammler 44c und der Ringverteiler 42c jeweils in die Führungsöffnung 44a bzw. den Führungsausgang 42b übergehen bzw. mit diesen integral ausgebildet sind.

Weiter ist der Fig. 5 zu entnehmen, dass innerhalb der Führungskanäle 42 und 44 Anstellwinkel α vorgesehen sind. Der Anstellwinkel α des ersten Führungskanals 42 ist hier im Bereich von ca. 70° ausgebildet, so dass eine besonders kompakte Bauweise der Wendevorrichtung 10 bei gleichzeitig möglichst geringem Einfluss auf die Strömungsverhältnisse in dem jeweiligen Führungskanal 42 und 44 erzielt werden kann.

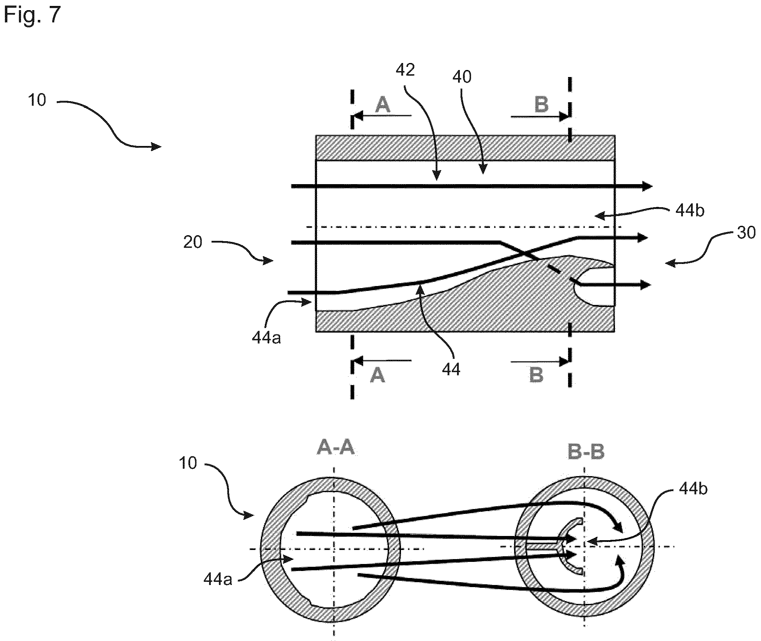

In Fig. 7 ist eine weitere Ausführungsform einer erfindungsgemäßen Wendevorrichtung 10 dargestellt. Diese orientiert sich an der Ausführungsform der Fig. 6, wobei jedoch hier der zweite Führungskanal 44 wieder offen und hier als Rampe ausgebildet ist. Diese rampenartige Ausbildung beinhaltet also einen zweiten Führungskanal 44, welcher nach oben zum ersten Führungskanal 42 geöffnet ausgebildet ist. Dies führt auch zu einer teilweisen seitlichen Öffnung der Führungsöffnung 44a und des Führungsausgangs 44b. Die Funktionsweise hinsichtlich der Umschichtung ist jedoch identisch zu den bereits beschriebenen Ausführungsformen der Wendevorrichtung 10.

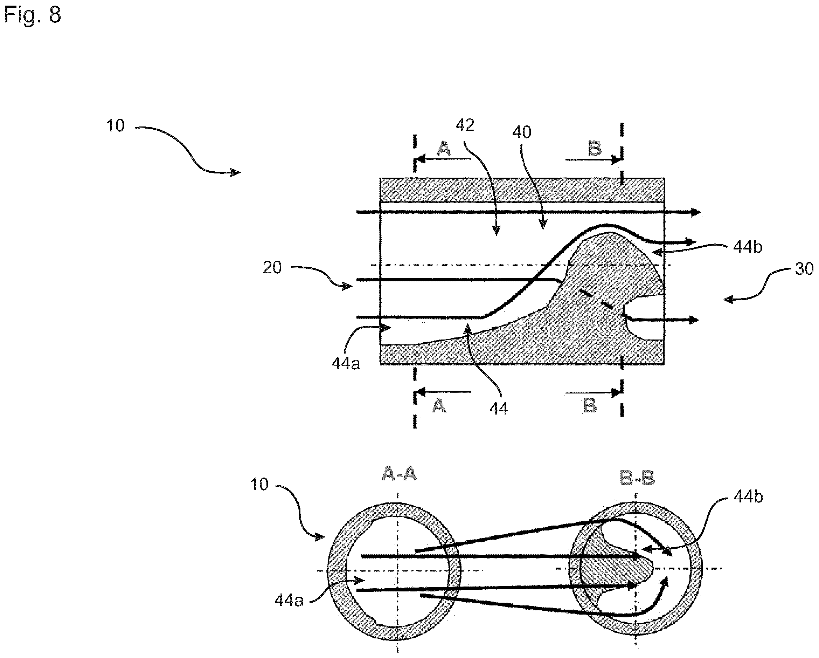

Fig. 8 zeigt eine weitere Ausführungsform einer Wendevorrichtung 10, wobei hier der Führungskanal 44 sehr vereinfacht ausgebildet ist und insbesondere in finnenartiger Weise die Strömungsbeeinflussung für die Umschichtfunktionalität ausbildet. Hier ist wieder ein nach oben geöffneter zweiter Führungskanal 44 mit entsprechend nach oben geöffneter Führungsöffnung 44a und nach oben geöffnetem Führungsausgang 44b vorgesehen. Auch hier wird, durch die Pfeile angedeutet, eine entsprechende Umschichtung der Schmelze 200 durchgeführt.

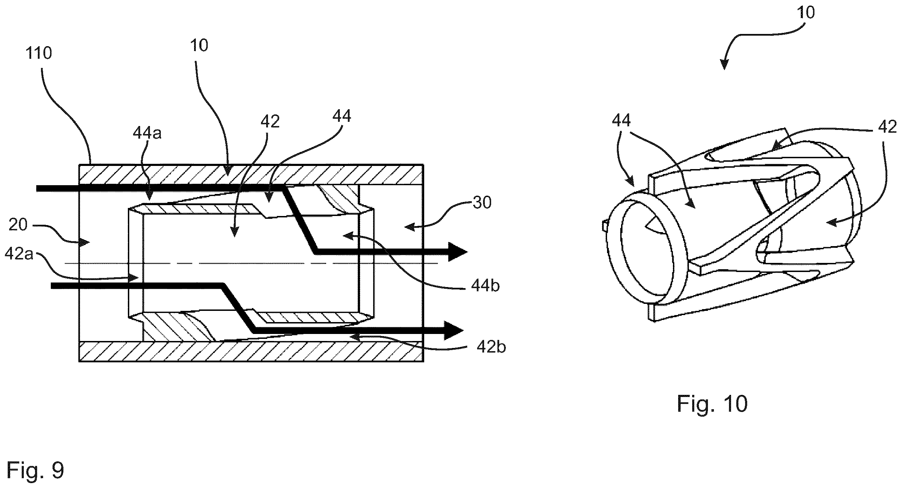

Die Figuren 9 und 10 zeigen eine weitere Ausführungsform einer erfindungsgemäßen Wendevorrichtung 10. Hierbei handelt es sich um eine einsetzbare Wendevorrichtung 10 mit einer Funktionalität, welche den bereits beschriebenen Ausführungsformen der Wendevorrichtung 10 entspricht. Durch die Ausbildung als Einsatz ist damit auch ein Nachrüsten mit einer erfindungsgemäßen Wendevorrichtung 10 einfach und kostengünstig möglich. Bei dieser Ausführungsform sind vier zweite Führungskanäle 44 und dementsprechend auch vier erste Führungskanäle 42 vorgesehen. In der Fig. 9 sind für diese Ausbildung mit Pfeilen ebenfalls die Strömungswege der Schmelze 200 dargestellt.

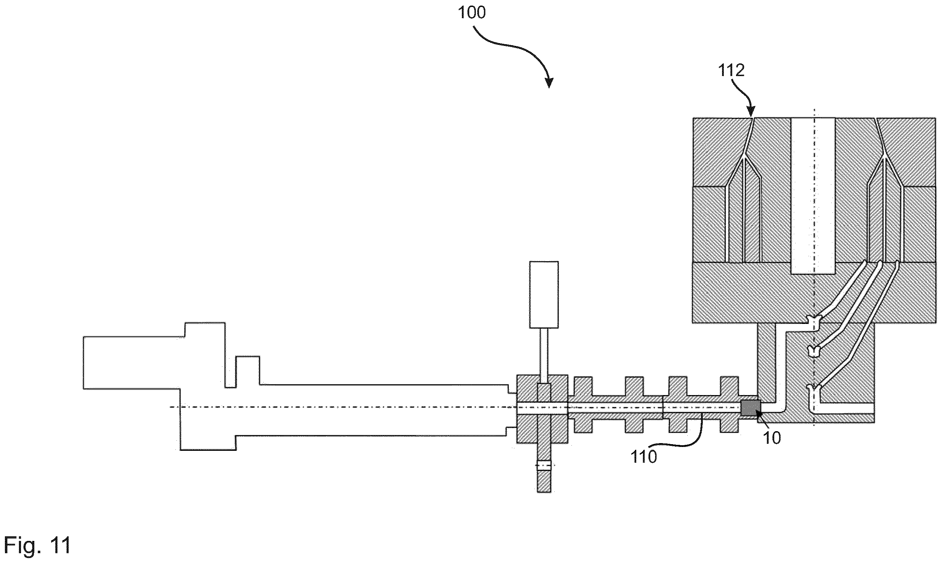

In Fig. 11 ist dargestellt, wie in einem Schmelzekanal 110 in einem Blaskopf 100 eine Wendevorrichtung 10 angeordnet sein kann. Dabei kann es sich hier um jede der beschriebenen Ausführungsformen der Wendevorrichtung 10 handeln. Der Blaskopf weist dabei einen umlaufenden Blasausgang 112 auf.

### Bezugszeichenliste

- 10: Wendevorrichtung
- 20: Schmelzeeingang
- 22: Mitte des Schmelzeeingangs
- 24: Rand des Schmelzeeingangs
- 30: Schmelzeausgang
- 32: Mitte des Schmelzeausgangs
- 34: Rand des Schmelzeausgangs
- 40: Schmelzeführungsmittel
- 42: erster Führungskanal
- 42a: Führungsöffnung
- 42b: Führungsausgang
- 42c: Ringverteiler
- 44: zweiter Führungskanal
- 44a: Führungsöffnung
- 44b: Führungsausgang
- 44c: Ringsammler
- 49: Umlenkungsabschnitt
- 70: freier Strömungsquerschnitt

- 100: Blaskopf
- 110: Schmelzekanal
- 112: Blasausgang
- 200: Schmelze
- 210: Neues Material
- 220: Altes Material

- SB: Sammelbreite
- OB: Öffnungsbreite
- VB: Verteilbreite
- α: Anstellwinkel

## Patentansprüche

1. Wendevorrichtung (10) für das Wenden einer Schmelze (200) in einem Schmelzekanal (110) eines Blaskopfes, aufweisend einen Schmelzeeingang (20) und einen Schmelzeausgang (30), wobei zwischen dem Schmelzeeingang (20) und dem Schmelzeausgang (30) zumindest ein Schmelzeführungsmittel (40) angeordnet ist für ein Umschichten von Schmelze (200) aus der Mitte (22) des Schmelzeeingangs (20) an den Rand (34) des Schmelzeausgangs (30) und für ein Umschichten von Schmelze (200) vom Rand (24) des Schmelzeeingangs (20) in die Mitte (32) des Schmelzeausgangs (30), wobei das zumindest eine Schmelzeführungsmittel (40) einen ersten Führungskanal (42) mit einer Führungsöffnung (42a) in der Mitte (22) des Schmelzeeingangs (20) und wenigstens einem Führungsausgang (42b) am Rand (34) des Schmelzeausgangs (30) aufweist, und das zumindest eine Schmelzeführungsmittel (40) einen zweiten Führungskanal (44) aufweist mit einem Führungsausgang (44b) in der Mitte (32) des Schmelzeausgangs (30) und wenigstens einer Führungsöffnung (44a) am Rand (24) des Schmelzeeingangs (20), **dadurch gekennzeichnet, dass** die Führungsöffnung (44a) des zweiten Führungskanals (44) fluidkommunizierend mit einem Ringsammler (44c) verbunden ist, welcher vollumfänglich am Umfang des Schmelzeingangs (20) angeordnet ist, wobei der Ringsammler (44c) eine Sammelbreite (SB) aufweist, welche größer als die Öffnungsbreite (OB) der Führungsöffnung (44a) des zweiten Führungskanals (44) ausgebildet ist.

2. Wendevorrichtung (10) nach dem Anspruch 1, **dadurch gekennzeichnet, dass** der Führungsausgang (42b) des ersten Führungskanals (42) fluidkommunizierend mit einem Ringverteiler (42c) verbunden ist, welcher im Wesentlichen vollumfänglich am Umfang des Schmelzeausgangs (30) angeordnet ist.

3. Wendevorrichtung (10) nach Anspruch 2, **dadurch gekennzeichnet, dass** der Ringverteiler (42c) eine Verteilbreite (VB) aufweist, welche größer als die Öffnungsbreite (OB) des Führungsausgangs (42b) des ersten Führungskanals (42) ausgebildet ist.

4. Wendevorrichtung (10) nach einem der Ansprüche 1 bis 3, **dadurch gekennzeichnet, dass** der Schmelzeeingang (20), der Schmelzeausgang (30) und des zumindest eine Schmelzeführungsmittel (40) totraumarm, insbesondere totraumfrei ausgebildet sind.

5. Wendevorrichtung (10) nach einem der Ansprüche 1 bis 4, **dadurch gekennzeichnet, dass** der Durchmesser des freien Strömungsquerschnitts (70) des Schmelzeeingangs (20) und/oder des Schmelzeausgangs (30) mit der Länge der Wendevorrichtung (10) in Durchströmungsrichtung in einem der folgenden Verhältnisse steht:
- 1:1
- 40:50
- 32:40
- 20:30

6. Wendevorrichtung (10) nach einem der Ansprüche 1 bis 5, **dadurch gekennzeichnet, dass** zwischen dem Schmelzeeingang (20) und dem Schmelzeausgang (30) im Bereich des zumindest einen Schmelzeführungsmittels (40) ein vergrößerter Außendurchmesser ausgebildet ist für einen freien Strömungsquerschnitt (70) in dem zumindest einen Schmelzeführungsmittel (40), welcher dem freien Strömungsquerschnitt (70) im Schmelzeeingang (20) und/oder im Schmelzeausgang (30) entspricht oder im Wesentlichen entspricht.

7. Wendevorrichtung (10) nach einem der Ansprüche 1 bis 6, **dadurch gekennzeichnet, dass** der erste Führungskanal (42) und/oder der zweite Führungskanal (44) im Verlauf einen Umlenkungsabschnitt (49) aufweisen mit einem Anstellwinkel (a) zur Strömungsrichtung der Schmelze (200) im zumindest einen Schmelzeführungsmittel (40) im Bereich von ca. 70°.

8. Wendevorrichtung (10) nach einem der Ansprüche 1 bis 7, **dadurch gekennzeichnet, dass** das zumindest eine Schmelzeführungsmittel (40) ausgebildet ist für eine Druckerhöhung der Schmelze (200) um einen Faktor im Bereich zwischen ca. 5 und ca. 20.

9. Wendevorrichtung (10) nach einem der Ansprüche 1 bis 8, **dadurch gekennzeichnet, dass** das zumindest eine Schmelzeführungsmittel (40), der Schmelzeeingang (20) und/oder der Schmelzeausgang (30) wenigstens abschnittsweise mit einer Schutzbeschichtung, insbesondere aufweisend Nickel, beschichtet ist.

10. Wendevorrichtung (10) nach einem der Ansprüche 1 bis 9, **dadurch gekennzeichnet, dass** das zumindest eine Schmelzeführungsmittel (40) und/oder der Schmelzeeingang (20) und/oder der Schmelzeausgang (30), insbesondere die gesamte Wendevorrichtung (10) durch ein aufbauendes Verfahren hergestellt ist.

11. Blaskopf (100) für das Durchführen eines Blasfolienextrusionsverfahrens, aufweisend zumindest einen Schmelzekanal (110) für die Förderung von Schmelze (200) zu einem Blasausgang (120) des Blaskopfes, **dadurch gekennzeichnet, dass** in dem zumindest einen Schmelzekanal (110) wenigstens eine Wendevorrichtung (10) mit den Merkmalen eines der Ansprüche 1 bis 10 angeordnet ist.

12. Verfahren für die Durchführung eines Spülvorgangs in einem Blaskopf (110) mit den Merkmalen des Anspruchs 11, aufweisend die folgenden Schritte:
- Einbringen einer Schmelze (200) in einen Schmelzeeingang (20) einer Wendevorrichtung (10) mit den Merkmalen eines der Ansprüche 1 bis 10
- Umschichten von Schmelze (200) aus der Mitte (22) des Schmelzeeingangs (20) an den Rand (34) eines Schmelzeausgangs (30) der Wendevorrichtung (10) und
- Umschichten von Schmelze (200) vom Rand (24) des Schmelzeeingangs (20) in die Mitte (32) des Schmelzeausgangs (30).

## Claims

1. A overturning device (10) for overturning a molten material (200) in a melt channel (110) of a blow head, comprising a melt inlet (20) and a melt outlet (30), wherein between the melt inlet (20) and the melt outlet (30) at least one melt guiding means (40) is arranged for moving molten material (200) from the center (22) of the melt inlet (20) to the edge (34) of the melt outlet (30) and for moving molten material (200) from the edge (24) of the melt inlet (20) to the center (32) of the melt outlet (30),
wherein the at least one melt guiding means (40) has a first guide channel (42) with a guide opening (42a) in the center (22) of the melt inlet (20) and at least one guide outlet (42b) at the edge (34) of the melt outlet (30),
and the at least one melt guiding means (40) has a second guide channel (44) with a guide outlet (44b) in the center (32) of the melt outlet (30) and at least one guide opening (44a) at the edge (34) of the melt inlet (20),
**characterized in**
**that** the guide opening (44a) of the second guide channel (44) is connected in a fluid-communicating manner with a ring collector (44c), which is arranged completely circumferentially on the circumference of the melt inlet (20), wherein the ring collector (44c) has a collecting width (SB), which is designed so as to be greater than the opening width (OB) of the guide opening (44a) of the second guide channel (44).

2. The overturning device (10) according to Claim 1, **characterized in that** the guide outlet (42b) of the first guide channel (42) is connected in a fluid-communicating manner to a ring distributor (42c), which is arranged substantially completely circumferentially on the circumference of the melt outlet (30).

3. The overturning device (10) according to Claim 2, **characterized in that** the ring distributor (42c) has a distribution width (VB), which is designed so as to be greater than the opening width (OB) of the guide outlet (42b) of the first guide channel (42).

4. The overturning device (10) according to any one of Claims 1 to 3, **characterized in that** the melt inlet (20), the melt outlet (30) and the at least one melt guiding means (40) are designed with little dead space, in particular, so as to be free of dead space.

5. The overturning device (10) according to any one of Claims 1 to 4, **characterized in that** the diameter of the free flow cross section (70) of the melt inlet (20) and/or of the melt outlet (30) is in one of the following proportions with the length of the overturning device (10) in the throughflow direction:
- 1:1
- 40:50
- 32:40
- 20:30

6. The overturning device (10) according to any one of Claims 1 to 5, **characterized in that** between the melt inlet (20) and the melt outlet (30) in the region of the at least one melt guiding means (40) an enlarged outer diameter is formed for a free flow cross section (70) in the at least one melt guiding means (40), which corresponds or substantially corresponds to the free flow cross section (70) in the melt inlet (20) and/or in the melt outlet (30).

7. The overturning device (10) according to any one of Claims 1 to 6, **characterized in that** the first guide channel (42) and/or the second guide channel (44) have a deflection section (49) in the course with an angle of attack (α) to the direction of flow of the molten material (200) in the at least one melt guiding means (40) in the range of approx. 70°.

8. The overturning device (10) according to any one of Claims 1 to 7, **characterized in that** the at least one melt guiding means (40) is designed to increase the pressure of the molten material (200) by a factor in the range between approx. 5 and approx. 20.

9. The overturning device (10) according to any one of Claims 1 to 8, **characterized in that** the at least one melt guiding means (40), the melt inlet (20) and/or the melt outlet (30) is coated at least in sections with a protective coating, in particular, comprising nickel.

10. The overturning device (10) according to any one of Claims 1 to 9, **characterized in that** the at least one melt guiding means (40) and/or the melt inlet (20) and/or the melt outlet (30), in particular, the entire overturning device (10) is produced by a constructive process.

11. A blow head (100) for implementing a blown film extrusion process, having at least one melt channel (110) for conveying molten material (200) to a blow outlet (120) of the blow head, **characterized in that** at least one overturning device (10) with the features of any one of Claims 1 to 10 is arranged in the at least one melt channel (110).

12. A method for implementing a rinsing process in a blow head (110) with the features of Claim 11, comprising the following steps:
- Introducing a molten material (200) into the melt inlet (20) of an overturning device (10) with the features of any one of Claims 1 to 10,
- moving molten material (200) from the center (22) of the melt inlet (20) to the edge (34) of a melt outlet (30) of the overturning device (10) and
- moving molten material (200) from the edge (24) of the melt inlet (20) to the center (32) of the melt outlet (30).

## Revendications

1. Dispositif de retournement (10) pour le retournement d'une fonte (200) dans un canal de fonte (110) d'une tête de soufflage, comprenant une entrée de fonte (20) et une sortie de fonte (30), moyennant quoi, entre l'entrée de fonte (20) et la sortie de fonte (30) est disposé au moins un moyen de guidage de fonte (40) pour la restructuration de la fonte (200) du centre (22) de l'entrée de fonte (20) vers le bord (34) de la sortie de fonte (30) et pour une restructuration de la fonte (200) du bord (24) de l'entrée de fonte (20) vers le centre (32) de la sortie de fonte (30),
l'au moins un moyen de guidage de fonte (40) comprenant un premier canal de guidage (42) avec une ouverture de guidage (42a) au centre (22) de l'entrée de fonte (20) et au moins une sortie de guidage (42b) au bord (34) de la sortie de fonte (30) et
l'au moins un moyen de guidage de fonte (40) comprenant un deuxième canal de guidage (44) avec une sortie de guidage (44b) au centre (32) de la sortie de fonte (30) et au moins une ouverture de guidage (44a) au bord (24) de l'entrée de fonte (20),
**caractérisé en ce que** l'ouverture de guidage (44a) du deuxième canal de guidage (44) est relié en communication fluidique avec un collecteur annulaire (44c), qui est disposé entièrement sur la circonférence de l'entrée de fonte (20), le collecteur annulaire (44c) présentant une largeur de collecte (SB) supérieure à la largeur d'ouverture (OB) de l'ouverture de guidage (44a) du deuxième canal de guidage (44).

2. Dispositif de retournement (10) selon la revendication 1, **caractérisé en ce que** la sortie de guidage (42b) du premier canal de guidage (42) est relié en communication fluidique avec un répartiteur annulaire (42c) qui est disposé globalement entièrement sur la circonférence de la sortie de fonte (30).

3. Dispositif de retournement (10) selon la revendication 2, **caractérisé en ce que** le répartiteur annulaire (42c) présente une largeur de répartition (VB) supérieure à la largeur d'ouverture (OB) de la sortie de guidage (42b) du premier canal de guidage (42).

4. Dispositif de retournement (10) selon l'une des revendications 1 à 3, **caractérisé en ce que** l'entrée de fonte (20), la sortie de fonte (30) et l'au moins un moyen de guidage de fonte (40) présente peu d'espace mort, plus particulièrement est exempt de tout espace mort.

5. Dispositif de retournement (10) selon l'une des revendications 1 à 4, **caractérisé en ce que** le diamètre de la section d'écoulement libre (70) de l'entrée de fonte (20) et/ou de la sortie de fonte (30) présente, avec la longueur du dispositif de retournement (10) dans la direction de l'écoulement, un des rapports suivants :
- 1:1
- 40:50
- 32:40
- 20:30.

6. Dispositif de retournement (10) selon l'une des revendications 1 à 5, **caractérisé en ce que**, entre l'entrée de fonte (20) et la sortie de fonte (30), au niveau de l'au moins un moyen de guidage de fonte (40), est réalisé un diamètre extérieur agrandi pour une section d'écoulement libre (70) dans l'au moins un moyen de guidage de fonte (40) qui correspond ou correspond globalement à la section d'écoulement libre (70) dans l'entrée de fonte (20) et/ou dans la sortie de fonte (30).

7. Dispositif de retournement (10) selon l'une des revendications 1 à 6, **caractérisé en ce que** le premier canal de guidage (42) et/ou le deuxième canal de guidage (44) présente, en ce qui concerne le contour, une portion de déviation (49) avec un angle d'incidence (α) par rapport à la direction d'écoulement de la fonte (200) dans l'au moins un moyen de guidage de fonte (40) de l'ordre d'environ 70°.

8. Dispositif de retournement (10) selon l'une des revendications 1 à 7, **caractérisé en ce que** l'au moins un moyen de guidage de fonte (40) est conçu pour une augmentation de la pression de la fonte (200) d'un facteur entre environ 5 et environ 20.

9. Dispositif de retournement (10) selon l'une des revendications 1 à 8, **caractérisé en ce que** l'au moins un moyen de guidage de fonte (40), l'entrée de fonte (20) et/ou la sortie de fonte (30) sont revêtus, au moins à certains endroits, d'un revêtement de protection, contenant plus particulièrement du nickel.

10. Dispositif de retournement (10) selon l'une des revendications 1 à 9, **caractérisé en ce que** l'au moins un moyen de guidage de fonte (40) et/ou l'entrée de fonte (20) et/ou la sortie de fonte (30), plus particulièrement l'ensemble du dispositif de retournement (10) est fabriqué à l'aide d'un procédé structurant.

11. Tête de soufflage (100) pour l'exécution d'un procédé d'extrusion par de film soufflé, comprenant au moins un canal de fonte (110) pour le transport de la fonte (200) vers une sortie de soufflage (120) de la tête de soufflage, **caractérisée en ce que**, dans l'au moins un canal de fonte (110), est disposé au moins un dispositif de retournement (10) avec les caractéristiques d'une des revendications 1 à 10.

12. Procédé d'exécution d'un processus d rinçage dans une tête de soufflage (110) avec les caractéristiques de la revendication 11, comprenant les étapes suivantes :
- introduction d'une fonte (200) dans une entrée de fonte (20) d'un dispositif de retournement (10) avec les caractéristiques d'une des revendications 1 à 10,
- restructuration de la fonte (200) du centre (22) de l'entrée de fonte (20) vers le bord (34) d'une sortie de fonte (30) du dispositif de retournement (10) et
- restructuration de la fonte (200) du bord (24) de l'entrée de fonte (20) vers le centre (32) de la sortie de fonte (30).
